(19) Europäisches Patentamt / European Patent Office / Office européen des brevets

(11) **EP 4 667 218 A1**

(12) **EUROPEAN PATENT APPLICATION**

(43) Date of publication:
**24.12.2025 Bulletin 2025/52**

(21) Application number: **24183278.1**

(22) Date of filing: **20.06.2024**

(51) International Patent Classification (IPC):
**B32B 27/32** (2006.01)   **C08L 23/14** (2006.01)
**C08L 23/10** (2006.01)

(52) Cooperative Patent Classification (CPC):
(C-Sets available)
**B32B 27/32;** C08L 2203/16; C08L 2205/03;
C08L 2207/20                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Poliolefine Italia S.r.l.
20121 Milano (IT)**

(72) Inventor: **HEES, Timo
65926 Frankfurt/M. (DE)**

(74) Representative: **LyondellBasell
c/o Basell Poliolefine Italia
Intellectual Property
P.le Donegani 12
44122 Ferrara (IT)**

(54) **RECYCLED POLYOLEFIN COMPOSITION HAVING IMPROOVED IMPACT PROPERTIES**

(57)     A recycled polyolefin composition comprising:
A) from 67 wt% to 87 wt%; of a recycled polypropylene composition;
B) from 13 wt% to 33 wt%; of a propylene ethylene copolymer comprising:
- (bl) from 21 wt% to 43 wt% of a propylene ethylene copolymer, having:
- units derived from ethylene, measured according to $^{13}$C-NMR, in an amount ranging from 1.7 wt% to 4.5 wt%;

- (b2) from 57 wt% to 79 wt%; of a propylene ethylene copolymer having:
- units derived from ethylene, measured according to $^{13}$C-NMR, in an amount ranging from 18.0 wt% to 36.0 wt%.

EP 4 667 218 A1

(52) Cooperative Patent Classification (CPC): (Cont.)

C-Sets
**C08L 23/142, C08L 23/142, C08L 23/10**

**Description**

FIELD OF THE INVENTION

The present disclosure relates to polypropylene compositions containing recycled elastomeric material that can be used for the preparation of injection molded articles.

BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow molded bottles and injection molded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a heterophasic polyolefin composition having flexural modulus equal to or lower than 600 MPa as a compatibilizer agent for a recycled polyolefin composition. It has now unexpectedly been found that certain specific formulations of recycled material although be based on multiplicity of chemically different components when mixed with virgin polymers generate polyolefin compositions combining good mechanical properties profile with an optimum balance of impact properties and tensile modulus.

SUMMARY OF THE INVENTION

It is therefore an object of the present disclosure a recycled polyolefin composition comprising:

A) from 67 wt% to 87 wt%; preferably from 69 wt% to 85 wt%; more preferably from 72 wt% to 82 wt%; of a recycled polypropylene composition;
B) from 13 wt% to 33 wt%; preferably from 15 wt% to 31 wt%; more preferably from 18 wt% to 28 wt%; of a polypropylene ethylene copolymer comprising:

- (b1) from 21 wt% to 43 wt%, preferably from 23 wt% to 41 wt%; more preferably from 27 wt% to 37 wt% of a propylene ethylene copolymer, having:

  - units derived from ethylene, measured according to $^{13}$C-NMR, in an amount ranging from 1.7 wt% to 4.5 wt%; preferably from 2.0 wt% to 4.3 wt%; more preferably ranging from 2.6 wt% to 3.7 wt%;
  - a fraction soluble in xylene at 25°C lower than 8.0 wt%; preferably lower than 7.5 wt%; more preferably lower than 7.0 wt%; even more preferably lower than 6.5 wt%; preferably being higher than 0.5 wt% and
  - a Melt Flow Rate (ISO 1133 230°C/2.16 kg) ranging from 18.0 to 34.0 g/10min; preferably ranging from 20.0 to 32.5 g/10min; more preferably ranging from 22.0 to 30.1 g/10min;
  - (b2) from 57 wt% to 79 wt%; preferably from 59 wt% to 77 wt%; more preferably from 63 wt% to 73 wt% of a copolymer of propylene and ethylene having:
  - units derived from ethylene, measured according to $^{13}$C-NMR, in an amount ranging from 18.0 wt% to 36.0 wt%; preferably from 20.2 wt% to 34.4 wt%; more preferably ranging from 22.8 wt% to 32.3 wt%;

said polypropylene composition (B) being further characterized by:

- a Melt Flow Rate (ISO 1133 230°C/2.16 kg) ranging from 0.2 to 1.7 g/10 min; preferably from 0.3 to 1.4 g/10min; more preferably ranging from 0.4 to 1.2 g/10min;
- an amount of fraction soluble in xylene at 25°C ranging from 52.0 wt% to 76.0 wt%; preferably from 54.0 wt% to 74.0 wt% ; more preferably from 56.0 wt% to 72.0 wt%;

- intrinsic viscosity fraction soluble in xylene at 25°C, measured in tetrahydronaphthalene at 135 °C, ranging from 2.1 to 4.7 dl/g; preferably from 2.4 to 4.3 dl/g; more preferably ranging from 2.7 to 3.9 dl/g; and,

in the said composition the sum of b1) and b2), being referred to the total weight of b1) and b2), is 100, the sum being referred to the amounts of (A) + (B).

The recycled polypropylene composition (A) has:

a propylene content, measured via $^{13}$C-NMR, higher than 50 wt%;
an amount of fraction soluble in xylene at 25°C ranging from 5.0 wt% to 15.0 wt%; preferably from 7.0 wt% to 13.0 wt% more preferably from 8.5 wt% to 11.8 wt%;

Melt Flow Rate (ISO 1133 230°C/2.16 kg) ranging from 11.2 to 23.2 g/10min; preferably ranging from 13.1 to 21.5 g/10min; more preferably ranging from 15.1 to 19.2 g/10min;
the FTIR spectrum of film recorded as described in the example section shows at least two peaks at different wavenumbers (cm-1) selected from:
3303 $\pm$ 1 cm-1; 1642 $\pm$ 1 cm-1; 1550 $\pm$ 1 cm-1; 1491 $\pm$ 1 cm-1; 1451 $\pm$ 1 cm-1; 1726 $\pm$ 1 cm-1; 1600 $\pm$ 11 cm-1, 748 $\pm$ 1 cm-1; 695 $\pm$ 1 cm-1. Ethylene derived units content, of fraction soluble in xylene at 25°C ranging measured with $^{13}$C-NMR, ranging from 26.0 wt% to 46.0 wt%; preferably ranging from 28.0 wt% to 44.0 wt%; more preferably ranging from 31.0 wt% to 42.0 wt%;
The recycled polyolefin composition can further contain C) from 4 wt% to 18 wt%; preferably from 5 wt% to 16 wt%; more preferably from 6 wt% to 14 wt%; based of amount of A+B of a inorganic filler such as talc, calcium carbonate and mineral fillers; talc being preferred;
Wherein the Melt Flow Rate of the recycled polyolefin composition, determined according to ISO 1133 (230° C, 2.16 kg), ranges from 3.0 g/10 min to 19.0 g/10 min; preferably from 5.0 g/10 min to 17.0 g/10 min, more preferably from 6.0 g/10 min to 13.0 g/10 min;
the sum of the amounts of (A), (B) and (C) being referred to the total weight of (A), (B) and (C) is 100.

BRIEF DESCRIPTION OF THE DRAWINGS

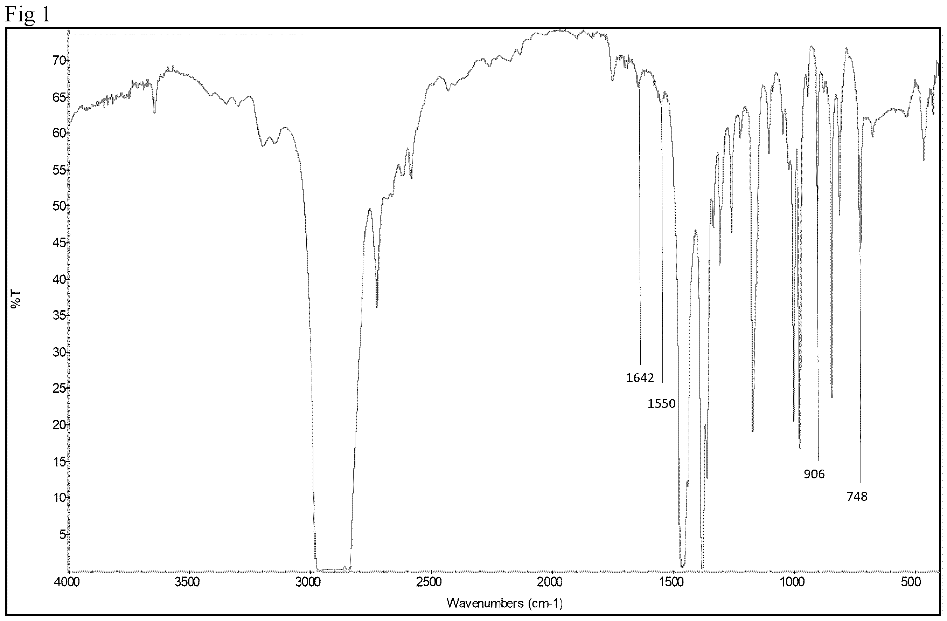

Fig 1 shows the FTIR spectrum of the recycled polymer grade used as component A in the examples.

DETAILED DESCRIPTION OF THE INVENTION

The term "copolymer" as used herein refers to polymers with two different recurring units.
The term "recycled" is used to designate polymer materials deriving from at least one cycle of processing into manufactured articles, as opposed to virgin polymers that is a polymer not subjected at least one cycle of processing into manufactured articles.
The term "consisting essentially of', as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.
The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A), (B) and optionally (C) and any preferred range of features of components (A), (B) and optionally (C) can be combined with any preferred range of one or more of the features of components (A), (B) and optionally (C) and with any possible additional component, and its features, described in the present disclosure.
Component B) can be prepared by polymerizing propylene, optionally in mixture with ethylene in the presence of a catalyst comprising the product of the reaction between:

i) a solid catalyst component comprising Ti, Mg, Cl, and at least an internal electron donor compound;
ii) an alkylaluminum compound and,
iii) an external electron-donor compound; preferably the external donor compound has the general formula:
$(R^7)_a(R^8)_b Si(OR^9)_c$, where a and b are integers from 0 to 2, c is an integer from 1 to 4 and the sum (a+b+c) is 4; $R^7$, $R^8$,

and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold $TiCl_4$; the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of $R^7$ and $R^8$ is selected from branched alkyl, cycloalkyl or aryl groups with 3-10 carbon atoms optionally containing heteroatoms and $R^9$ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, $R^8$ is a branched alkyl or cycloalkyl group, optionally containing heteroatoms, and $R^9$ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component B) can be prepared in a continuous sequential polymerization process, wherein component b1) is prepared in the first reactor and component b2) is prepared in the second reactor in the presence of component b1) according to the known techniques and operating in gas phase, or in liquid phase in the presence or not of inert diluent, or by mixed liquid-gas techniques.

Component B) is preferably a commercial polymer grade such as Adflex Q100F sold by Lyondellbasell.

Component (A) is a can be a Post-Industrial Resin (PIR) or a Post-Consumer Resin (PCR).

The term Post-Industrial Resin (PIR) is defined as the waste generated from a manufacturing process that is reclaimed or used again in the same material.

Post-Consumer Resin (PCR) is defined as recyclate derived from an end product that has completed its life cycle as a consumer item and would otherwise be disposed of as waste.

If needed, the final composition comprising (A), (B) and optionally (C) can be subject to a chemical treatment with organic peroxides in order to lower the average molecular weight and increase the melt flow index up to the value needed for the specific application.

Preferably Post-Consumer Resin (PCR) is used.

When component C is not used the recycled polyolefin composition of the present disclosure is characterized by very high value of impact properties. When component C) is used the value of impact properties is lowered but the tensile modulus is strongly increased.

Preferably the tensile modulus of the recycled polyolefin composition when component C is used ranges from to 700 MPa to 1440 MPa more preferably from 840 to 1340 MPa; even more preferably from 950 to 1290 MPa .

Preferably when component C is used the value of Charpy notched impact strength at 23°C preferably ranges from 9.0 kJ/m2 to 21.0 kJ/m2; more preferably it ranges from 10.5 kJ/m2 to 18.1 kJ/m2; even more preferably it ranges from 12.5 kJ/m2 to 16.6 kJ/m2.

Preferably when component C is not used the value of Charpy notched impact strength at 23°C preferably ranges from 40.0 kJ/m2 to 74.0 kJ/m2; more preferably it ranges from 42.5 kJ/m2 to 71.1 kJ/m2; even more preferably it ranges from 47.5 kJ/m2 to 65.6 kJ/m2.

Preferably the value of elongation at break of the recycled polyolefin composition ranges from 450 % to 850 %; more preferably it ranges from 500% to 800%; even more preferably it ranges from 550 % to 750 %.

The whole propylene composition of the present disclosure can be obtained by mechanical blending of the components (A), (B) and optionally (C) according to conventional techniques.

The final composition comprising the components (A) (B) and optionally (C) may be added with conventional additives, fillers and pigments, commonly used in olefin polymers such as nucleating agents, extension oils, mineral fillers, and other organic and inorganic pigments.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of extruded articles and injection molded articles.

The following examples are given in order to illustrate, but not limit the present disclosure.

## EXAMPLES

### Characterization methods

**Xylene-soluble (XS) Fraction at 25°C:** Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C. **Melting temperature and crystallization temperature:** Determined by differential scanning calorimetry (DSC). The melting point has been measured by using a DSC instrument according to ISO 11357-3, at scanning rate of 20 °C/min both in cooling and heating, on a sample of weight between 5 and 7 mg, under inert N2 flow. Instrument calibration made with Indium.

**Melt Flow Rate (MFR):** Measured according to ISO 1133-1 at 230 °C with a load of 2.16 kg or 5 kg, as specified.

**Intrisic Viscosity (IV):** The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Ethylene (C2) and propylene (C3) content via $^{13}$C-NMR:** $^{13}$C NMR spectra were acquired on a Bruker AV-600 spectrometer equipped with cryoprobe, operating at 160.91 MHz in the Fourier transform mode at 120°C. The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

$$PPP = 100\ T_{\beta\beta}/S \qquad PPE = 100\ T_{\beta\delta}/S \qquad EPE = 100\ T_{\delta\delta}/S$$

$$PEP = 100 \ S_{\beta\beta}/S \qquad PEE = 100 \ S_{\beta\delta}/S \qquad EEE = 100 \ (0.25 \ S_{\gamma\delta}+0.5 \ S_{\delta\delta})/S$$

$$S = T_{\beta\beta} + T_{\beta\delta} + T_{\delta\delta} + S_{\beta\beta} + S_{\beta\delta} + 0.25 \ S_{\gamma\delta} + 0.5 \ S_{\delta\delta}$$

The molar percentage of propylene content was evaluated using the following equation:

$$P\% \ mol = 100 * [EPE+PPE+PPP]$$

The molar percentage of ethylene content was evaluated using the following equation:

$$E\% \ mol = 100 * [PEP+PEE+EEE]$$

The weight percentage of ethylene content was evaluated using the following equation:

$$E\% \ wt. = \frac{100 * E\% \ mol * MW_E}{E\% \ mol * MW_E + P\% \ mol * MW_P}$$

where P% mol is the molar percentage of propylene content, while $MW_E$ and $MW_P$ are the molecular weights of ethylene and propylene, respectively.

**Samples for mechanical tests:** Samples have been obtained according to ISO 1873-2:2007.
**Charpy notched impact test** is determined according to ISO 179-1eA, and ISO 1873-2.
**Elongation at yield:** measured according to ISO 527.
**Elongation at break:** measured according to ISO 527.
**Stress at break:** measured according to ISO 527.
**Tensile Modulus:** measured according to ISO 527-2.
**Density:** measured according to ISO 1183-1.
**FTIR Spectrum:** The IR spectrum was determined by infrared (IR) spectroscopy by recording the sample against a background level of air with a Fourier transform infrared (FTIR) spectrometer. The data acquisition parameters of the instrument were:

- purge time: 30 seconds minimum
- collection time: 3 minutes minimum
- apodization: Happ-Genzel
- resolution: 2 cm$^{-1}$.

Sample preparation using a hydraulic press, a thick sheet was obtained by compression molding approximately 1 g sample between two sheets of aluminum foil. A small portion of the resulting sheet was cut to form a film. The film thickness was set to have a maximum absorbance of the CH 2 absorption band at ~720 cm-1 of 1.3 au (% Transmittance > 5%). Molding conditions were performed at a temperature of approximately $180 \pm 10°C$ (356°F) and a pressure of approximately 10 kg/cm2 (142.2 psi) for approximately one minute. After the pressure was released, the sample was removed from the press and cooled to room temperature. The spectrum of the pressed film was recorded as a function of absorbance versus wavenumbers (cm$^{-1}$).

**Example 1**

**Component A)**

Component A is PCR polymer grade from municipal waste. The properties of the polymer are reported on Table 1.

Table 1

| Component A | | |
|---|---|---|
| MFR 2.16 Kg/230°C | g/10min | 17.0 |
| Density | g/cm3 | 0,923 |
| XS | wt % | 10,1 |
| Tm | °C | 161.6; 126.0 |
| Tc | °C | 120.0; 111.1 |
| Hc | J/g | -86.6 |
| Hm | J/g | 98.7 |
| C2- XS (NMR) | %wt | 36.3 |

the FTIR spectrum of film shows at least two peaks at different wavenumbers (cm$^{-1}$) selected from:

3303 $\pm$1 cm-1; 1642 $\pm$1 cm-1; 1550 $\pm$1 cm-1; 1491$\pm$1 cm-1; 1451$\pm$1 cm-1; 1726 $\pm$1 cm-1; 1600 $\pm$11 cm-1, 748 $\pm$1 cm-1; 695 $\pm$1 cm-1.

**Component B)**

Component B is a commercial grade Adflex Q100F sold by LyondellBasell, it can be synthesized according to the procedure known in the art, Adflex Q100F has the property set forth in Table 2.

Table 2

| Component B) | | |
|---|---|---|
| b1) | | |
| XS | wt% | <6.5 |
| C2 content | wt% | 3.2 |
| MFR 230°C/2.16 kg | g/10 min | 25.0 |
| split | wt% | 32 |
| b2) | | |
| C2 content | wt% | 27.0 |
| split | wt% | 68 |
| total composition | | |
| MFR 230°C/2.16 kg | g/10 min | 0.6 |
| XS | wt% | 64 |
| IV on XS | dl/g | 3.2 |
| XS fraction soluble in xylene at 25°C C2 ethylene derived units IV intrinsic viscosity | | |

**Comparative component B1)**

Comparative Component B1 is a commercial grade Moplen EP340M heterophasic copolymer, it can be synthesized according to the procedure known in the art. Moplen EP340M has the property set forth in Table 3.

Table 3

| Component B 1 | | |
|---|---|---|
| b11) | | |
| XS | wt% | <2.5 |
| MFR 230°C/2.16 kg | g/10 min | 23 |
| split | wt% | 75 |
| b12) | | |
| C2 content | wt% | 50 |
| split | wt% | 25 |
| total composition | | |
| MFR 230°C/2.16 kg | g/10 min | 7.7 |
| XS | wt% | 22.6 |
| IV on XS | dl/g | 3.1 |
| C2 content | wt% | 9.2 |
| XS fraction soluble in xylene at 25°C<br>C2 ethylene derived units<br>IV intrinsic viscosity<br>Component C) is a commercial talc IMIFabi HM05 (0.25 g/cm3, particle size d50 of 1.4 $\mu$m) | | |

## Examples 1 and 2 and comparative example 2

Components A), B) and optionally C) have been blended in an extruder (Berstorff extruder). The polymer particles are extruded under nitrogen atmosphere in a twin screw extruder, at a rotation speed of 250 rpm and a melt temperature of 200-250° C. The composition is reported in Table 3 and the characterization of the obtained composition is reported in Table 4.

Table 4

| Example | 1 | Comp 2 |
|---|---|---|
| Component A wt% | 75 | 35 |
| Component B) wt% | 25 | 0 |
| Component B1) wt% | 0 | 65 |

Example 2

To the composition of example 1 has been added 10 wt% of talc.

Table 5

| | Units | Ex 1 | Ex 2 | Comp Ex 3 |
|---|---|---|---|---|
| MFR | g/10min | 7.6 | 9.1 | 10.1 |
| Charpy 23°C<br>Charpy 0°C | kJ/m$^2$<br>kJ/m$^2$ | 53.7<br>9.5 | 13.4<br>5.8 | 13<br>6.5 |
| D/B TT | °C | -35.7 | -25 | --39 |
| Tensile Modulus Elongatio n at break | N/mm$^2$<br>% | 790<br>660 | 1180<br>600 | 1140<br>90 |
| XS | % | 22.8 | 18.8 | 17.6 |

The examples according to the invention shows an improved elongation at break with good impact properties

**Claims**

1. A recycled polyolefin composition comprising:

   A) from 67 wt% to 87 wt%; of a recycled polypropylene composition;
   B) from 13 wt% to 33 wt%; of a propylene ethylene copolymer comprising:

      (b1) from 21 wt% to 43 wt% of a propylene ethylene copolymer, having:

         - units derived from ethylene, measured according to $^{13}$C-NMR, in an amount ranging from 1.7 wt% to 4.5 wt%;
         - a fraction soluble in xylene at 25°C lower than 8.0 wt%; and
         - a Melt Flow Rate (ISO 1133 230°C/2.16 kg) ranging from 18.0 to 34.0 g/10min;

      (b2) from 57 wt% to 79 wt%; of a propylene ethylene copolymer having:

         - units derived from ethylene, measured according to $^{13}$C-NMR, in an amount ranging from 18.0 wt% to 36.0 wt%;

      said propylene ethylene copolymer (B) being further **characterized by**:

         - a Melt Flow Rate (ISO 1133 230°C/2.16 kg) ranging from 0.2 to 1.7 g/10 min;
         - an amount of fraction soluble in xylene at 25°C ranging from 52.0 wt% to 76.0 wt%;
         - intrinsic viscosity fraction soluble in xylene at 25°C, measured in tetrahydronaphthalene at 135 °C, ranging from 2.1 to 4.7 dl/g; and,

            in the said composition the sum of b1) and b2), being referred to the total weight of b1) and b2), is 100,
            the sum of the amounts of (A), (B) being referred to the total weight of (A) and (B) is 100.

   The recycled polypropylene composition (A) has:

      i) A propylene content, measured via $^{13}$C-NMR, higher than 50 wt%;
      ii) an amount of fraction soluble in xylene at 25°C ranging from 5.0 wt% to 15.0 wt%;
      iii) a Melt Flow Rate (ISO 1133 230°C/2.16 kg) ranging from 11.2 to 23.2 g/10min;
      iv) a FTIR spectrum of film recorded as described in the example section shows at least two peaks at different wavenumbers (cm-1) selected from: 3303 ±1 cm-1; 1642 ±1 cm-1; 1550 ±1 cm-1; 1491±1 cm-1; 1451±1 cm-1; 1726 ±1 cm-1; 1600 ±11 cm-1, 748 ±1 cm-1; 695 ±1 cm-1.
      v) Ethylene derived units content, of fraction soluble in xylene at 25°C ranging measured with $^{13}$C-NMR, ranging from 26.0 wt% to 46.0 wt%.

2. The recycled polyolefin composition according to claim 1 wherein the component (A) ranges from 69 wt% to 85 wt% and component (B) ranges from 15 wt% to 31 wt%.

3. The recycled polyolefin composition according to claims 1 or 2 wherein in component B) component b1) ranges from 23 wt% to 41 wt%; and component b2) ranges from 59 wt% to 77 wt%;.

4. The recycled polyolefin composition according to any of the preceding claims wherein the component (A) ranges from 72 wt% to 82 wt% and component (B) ranges from 18 wt% to 28 wt%.

5. The recycled polyolefin composition according to any of the preceding claims wherein the composition comprises from 4 wt% to 18 wt% of an inorganic filler component C) the sum being referred to the amounts of (A) + (B).

6. The recycled polyolefin composition according to any of the preceding claims wherein component C) is talc.

7. The recycled polyolefin composition according to any of the preceding claims wherein component (B) has the amount of fraction soluble in xylene at 25°C ranging from 54.0 wt% to 74.0 wt%.

8. The recycled polyolefin composition according to any of the preceding claims wherein component (C) ranges from 5 wt% to 16 wt% the sum being referred to the amounts of (A) + (B).

9. The recycled polyolefin composition according to any of the preceding claims wherein component (B) has the intrinsic viscosity fraction soluble in xylene at 25°C, measured in tetrahydronaphthalene at 135 °C, ranging from 2.4 to 4.3 dl/g.

10. The recycled polyolefin composition according to a to any of the preceding claims wherein in component A) the melt flow rate (ISO 1133-1 230°C/2.16 kg) ranges from 13.1 to 21.5 g/10min.

11. The recycled polyolefin composition according to any of the preceding claims wherein in component (A) the ethylene derived units content, of fraction soluble in xylene at 25°C ranges from 28.0 wt% to 44.0 wt%.

12. The recycled polyolefin composition according to any of the preceding claims wherein in component (B) the intrinsic viscosity fraction soluble in xylene at 25°C, measured in tetrahydronaphthalene at 135 °C, ranges from 2.7 to 3.9 dl/g;.

13. The recycled polyolefin composition according to any of the preceding claims wherein in component b2) the units derived from ethylene, measured according to $^{13}$C-NMR, ranges from 20.2 wt% to 34.4 wt%.

14. The recycled polyolefin composition according to any of the preceding claims wherein in component b1) the units derived from ethylene, measured according to $^{13}$C-NMR, range from 2.0 wt% to 4.3 wt%.

15. An injection molded article obtained from the recycled polyolefin composition according to any of the preceding claims.

Fig 1

**EUROPEAN SEARCH REPORT**

Application Number

EP 24 18 3278

## DOCUMENTS CONSIDERED TO BE RELEVANT

| Category | Citation of document with indication, where appropriate, of relevant passages | Relevant to claim |
|---|---|---|
| A | US 2017/044359 A1 (KAHLEN SUSANNE [AT] ET AL) 16 February 2017 (2017-02-16)<br>* the whole document *<br>----- | 1-15 |
| A | US 7 767 761 B2 (BASELL POLIOLEFINE SRL [IT]) 3 August 2010 (2010-08-03)<br>* the whole document *<br>----- | 1-15 |

**CLASSIFICATION OF THE APPLICATION (IPC)**

INV.
B32B27/32
C08L23/14
C08L23/10

**TECHNICAL FIELDS SEARCHED (IPC)**

B32B
C08L

The present search report has been drawn up for all claims

| Place of search | Date of completion of the search | Examiner |
|---|---|---|
| Munich | 15 November 2024 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3278

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| US 2017044359 | A1 | 16-02-2017 | BR 112016024671 | A2 | 15-08-2017 |
| | | | CA 2946800 | A1 | 12-11-2015 |
| | | | CN 106232707 | A | 14-12-2016 |
| | | | EP 3140348 | A1 | 15-03-2017 |
| | | | ES 2945904 | T3 | 10-07-2023 |
| | | | TW 201602199 | A | 16-01-2016 |
| | | | US 2017044359 | A1 | 16-02-2017 |
| | | | WO 2015169690 | A1 | 12-11-2015 |
| US 7767761 | B2 | 03-08-2010 | AT E459461 | T1 | 15-03-2010 |
| | | | EP 1963067 | A1 | 03-09-2008 |
| | | | JP 2009520847 | A | 28-05-2009 |
| | | | US 2009048403 | A1 | 19-02-2009 |
| | | | WO 2007071494 | A1 | 28-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5030662 A
- WO 2007071494 A
- US 4522930 A
- EP 045977 A2
- WO 0063261 A
- WO 0157099 A
- US 4399054 A
- US 4469648 A

**Non-patent literature cited in the description**

- **HUGGINS, M.L**. *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15 (4), 1150-1152